# EUROPEAN PATENT APPLICATION

(11) **EP 3 473 087 A1**
(43) Date of publication of application: **24.04.2019**
(21) Application number: 18167997.8
(22) Date of filing: 18.04.2018
(51) Int. Cl.: A01G 31/06

(54) **HOUSEHOLD INTELLIGENT SOILLESS CULTURE SYSTEM**

(30) Priority: 20.10.2017 CN 201710986348
(71) Applicant: Linyi Jigang Agricultural Technology Co., Ltd., 277700 Linyi City, Shandong (CN)
(72) Inventor: JI, Jinggang, Linyi City, Shandong 277700 (CN); JI, Feng, Linyi City, Shandong 277700 (CN); GUI, Lihua, Linyi City, Shandong 277700 (CN); LIU, Bangli, Linyi City, Shandong 277700 (CN)
(74) Representative: Vitina, Maruta

(57) **Abstract**

The present invention discloses a household intelligent soilless culture system, comprising a rectangular substrate. A U type bracket is vertically welded on both ends of the substrate. A U type sliding chute is formed in the bracket along a length direction. A sliding block is sleeved in the sliding chute in a sliding manner. One end of the sliding block, which extends out of the sliding chute, is hinged with a pull rod, and one end of the pull rod, which is away from the sliding block, is sleeved with a casing pipe through a thread. One end of the casing pipe, which is away from the pull rod, is welded with a connecting plate on both sides. Culture pipelines are installed in the bracket along a vertical direction at an equal distance. A liquid inlet pipeline communicated with the culture pipeline is installed on one side of the bracket along the vertical direction. A liquid storing tank fixedly connected with the bracket is installed on a bottom of the liquid inlet pipeline. The present invention is suitable for installation and fixation in different positions, facilitates installation and fixation for soilless culture, realizes automatic liquid delivery in the culture pipeline, alleviates labor intensity of operators, enhances benefits of soilless culture, effectively avoids waste of a culture solution, and effectively prevents plant roots from eroding due to oxygen deficiency.

## Description

### TECHNICAL FIELD

The present invention relates to the technical field of soilless culture, and particularly relates to a household intelligent soilless culture system.

### BACKGROUND

Soilless culture is a modern seedling technology that adopts mechanized precise seeding and one-step seedling formation by using turf or leaf mold of the forest, expanded vermiculite and other light-weight materials as seedling substrates to fix plants and enable plant roots to directly contact nutrient solutions. A selected seeding tray is divided into different lattices and chambers. For sowing, one seed is contained in one lattice; and for seedling, one plant is contained in one chamber. A seedling root and the substrate are mutually wound together. A root lump presents a shape of a big-end-up plug. This is generally called as plug soilless seedling. During soilless culture, a bracket of soilless culture is inconvenient in installation and fixation. Meanwhile, it is difficult to strictly and precisely control the amount of the nutrient solutions, and the plant roots are easy to erode due to lack of oxygen. Thus, a household intelligent soilless culture system is needed.

### SUMMARY

The purpose of the present invention is to propose a household intelligent soilless culture system in order to solve disadvantages in the prior art.

To achieve the above purpose, the present invention adopts the following technical solution:
A household intelligent soilless culture system comprises a rectangular substrate. A U type bracket is vertically welded on both ends of the substrate. A U type sliding chute is formed in the bracket along a length direction. A sliding block is sleeved in the sliding chute in a sliding manner. One end of the sliding block, which extends out of the sliding chute, is hinged with a pull rod, and one end of the pull rod, which is away from the sliding block, is sleeved with a casing pipe through a thread. One end of the casing pipe, which is away from the pull rod, is welded with a connecting plate on both sides. Culture pipelines are installed in the bracket along a vertical direction at an equal distance. A liquid inlet pipeline communicated with the culture pipeline is installed on one side of the bracket along the vertical direction. A liquid storing tank fixedly connected with the bracket is installed on a bottom of the liquid inlet pipeline. A liquid discharging pipeline communicated with the culture pipeline is installed on the other side of the bracket along the vertical direction. A culture groove with an open top is formed in the top of the substrate along the length direction. A liquid delivery pipeline communicated with the liquid discharging pipeline is installed in the culture groove.

Preferably, through holes communicated with the interior of the culture pipeline are formed in the top of the culture pipeline along a length direction at an equal distance; circular supporting plates are movably sleeved in the through holes; a grid plate is welded in the culture pipeline along a length direction; a first liquid level sensor fixedly connected with the inner side wall of the culture pipeline is installed above one end of the grid plate close to the liquid inlet pipeline; a second liquid level sensor fixedly connected with the inner side wall of the culture pipeline is installed above one end of the grid plate away from the liquid inlet pipeline; a first connecting pipeline communicated with the liquid inlet pipeline is installed above one end of the culture pipeline close to the liquid inlet pipeline; and a second connecting pipeline communicated with the liquid discharging pipeline is installed above one end of the culture pipeline away from the liquid inlet pipeline.

Preferably, an air inlet pipeline is installed on a bottom of the culture pipeline along a length direction; a nozzle communicated with the air inlet pipeline is embedded on the bottom of the culture pipeline; an air pipe is installed on one end of the air inlet pipeline; and an air pump fixedly connected with the bracket is installed on one end of the air pipe away from the air inlet pipeline.

Preferably, an electromagnetic valve is installed on the first connecting pipeline; and a water pump is installed on the liquid inlet pipeline.

Preferably, a control box is installed under one side of the bracket; a single-chip microcomputer with a model of ARM is installed in the control box; and the single-chip microcomputer is electrically connected with the first liquid level sensor, the second liquid level sensor, the electromagnetic valve, the water pump and the air pump.

Preferably, the brightening mechanism comprises a driving gear sleeved movably with the inner side wall of the limiting groove; an optical shaft is fixedly sleeved in the driving gear; an arc-shaped brightening plate butted against the limiting groove is installed on one end of the optical shaft which extends from the driving gear; brightening lamps are installed at an equal distance on one side of the brightening plate close to the substrate along a length direction of the brightening plate; one end of the brightening plate is fixedly connected with the optical shaft; a rotating shaft movably sleeved with the inner side wall of the bracket is welded on one end of the brightening plate; the rotating shaft and the optical shaft are located on a same axis; and a motor fixedly connected with the bracket is installed on one end of the optical shaft which extends from the bracket.

The present invention has beneficial effects that:
The sliding chute, the sliding block, the pull rod, the casing pipe and the connecting plate arranged on the bracket facilitate installation and fixation of the bracket, are suitable for installation and fixation in different positions, and facilitate installation and fixation for soilless culture.

The through holes, the supporting plate, the grid plate, the first liquid level sensor, the first connecting pipeline, the second liquid level sensor and the second connecting pipeline arranged on the culture pipeline realize automatic liquid delivery in the culture pipeline, alleviate labor intensity of operators, and enhance benefits of soilless culture.

The air inlet pipeline, the air pipe, the culture groove and the liquid delivery pipeline arranged on the culture pipeline effectively avoid waste of a culture solution, and effectively prevents plant roots from eroding due to oxygen deficiency. The design is suitable for installation and fixation in different positions, facilitates installation and fixation for soilless culture, realizes automatic liquid delivery in the culture pipeline, alleviates labor intensity of the operators, enhances benefits of soilless culture, effectively avoids waste of a culture solution, and effectively prevents plant roots from eroding due to oxygen deficiency.

### DESCRIPTION OF DRAWINGS

Fig. 1 is a structural schematic diagram of a household intelligent soilless culture system proposed in the present invention;
Fig. 2 is a structural schematic diagram of a culture pipeline of a household intelligent soilless culture system proposed in the present invention; and
Fig. 3 is a structural schematic diagram of a brightening mechanism of a household intelligent soilless culture system proposed in the present invention.

In the figures: 1 substrate; 2 bracket; 3 sliding chute; 4 sliding block; 5 pull rod; 6 casing pipe; 7 connecting plate; 8 culture pipeline; 9 culture groove; 10 liquid inlet pipeline; 11 liquid storing tank; 12 liquid discharging pipeline; 13 liquid delivery pipeline; 14 through hole; 15 supporting plate; 16 grid plate; 17 first liquid level sensor; 18 first connecting pipeline; 19 second liquid level sensor; 20 second connecting pipeline; 21 air inlet pipeline; 22 air pipe; 23 limiting groove; 24 brightening mechanism; 2-1 brightening mechanism; 2-2 brightening plate; and 2-3 brightening lamp.

### DETAILED DESCRIPTION

Technical solutions of embodiments of the present invention will be clearly and fully described below in combination with drawings in embodiments of the present invention. Apparently, described embodiments are merely some embodiments of the present invention, not all of the embodiments.

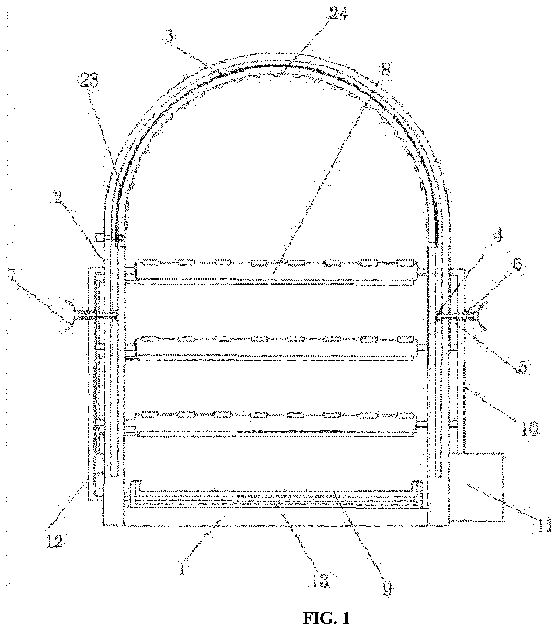

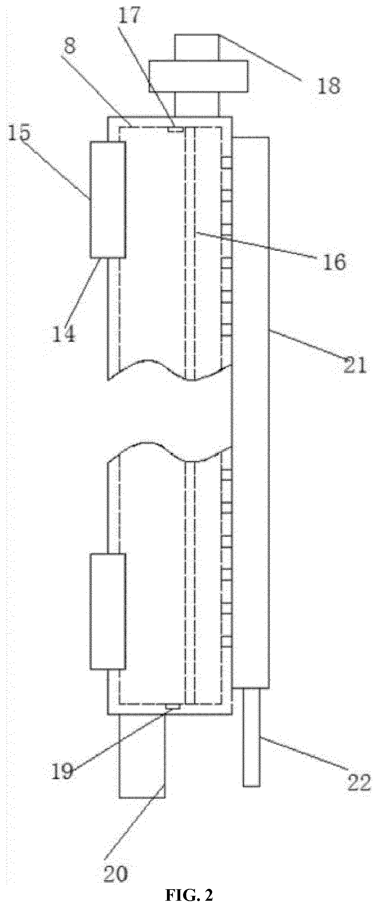

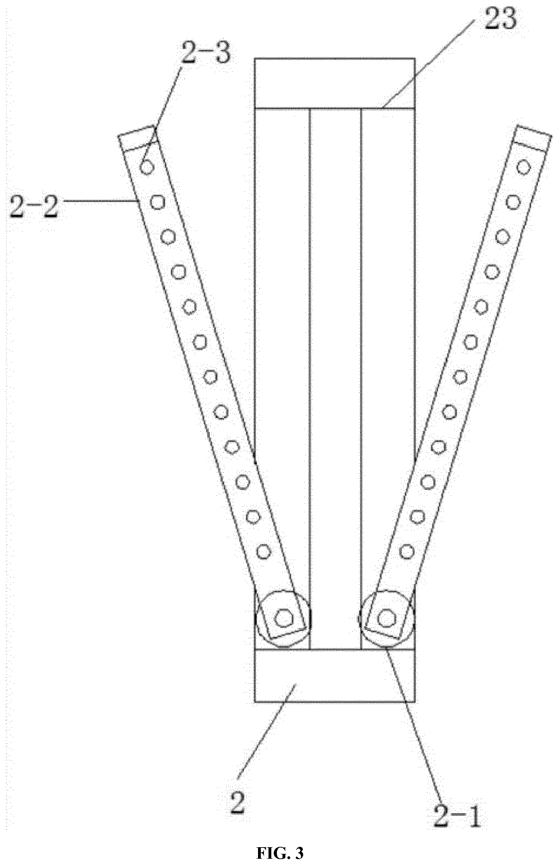

With reference to Figs. 1-3, a household intelligent soilless culture system comprises a rectangular substrate 1. A U type bracket 2 is vertically welded on both ends of the substrate 1. A U type sliding chute 3 is formed in the bracket 2 along a length direction. A sliding block 4 is sleeved in the sliding chute 3 in a sliding manner. One end of the sliding block 4, which extends out of the sliding chute 3, is hinged with a pull rod 5, and one end of the pull rod 5, which is away from the sliding block 4, is sleeved with a casing pipe 6 through a thread. One end of the casing pipe 6, which is away from the pull rod 5, is welded with a connecting plate 7 on both sides. Culture pipelines 8 are installed in the bracket 2 along a vertical direction at an equal distance. A liquid inlet pipeline 10 communicated with the culture pipeline 8 is installed on one side of the bracket 2 along the vertical direction. A liquid storing tank 11 fixedly connected with the bracket 2 is installed on a bottom of the liquid inlet pipeline 10. A liquid discharging pipeline 12 communicated with the culture pipeline 8 is installed on the other side of the bracket 2 along the vertical direction. A culture groove 9 with an open top is formed in the top of the substrate 1 along the length direction. A liquid delivery pipeline 13 communicated with the liquid discharging pipeline 12 is installed in the culture groove 9.

Through holes 14 communicated with the interior of the culture pipeline 8 are formed in the top of the culture pipeline 8 along a length direction at an equal distance. Circular supporting plates 15 are movably sleeved in the through holes 14. A grid plate 16 is welded in the culture pipeline 8 along a length direction. A first liquid level sensor 17 fixedly connected with the inner side wall of the culture pipeline 8 is installed above one end of the grid plate 16 close to the liquid inlet pipeline 10. A U type sliding chute 3 is formed in the grid plate 16 along a length direction. A sliding block 4 is sleeved in the sliding chute 3 in a sliding manner. One end of the sliding block 4, which extends out of the sliding chute 3, is hinged with a pull rod 5, and one end of the pull rod 5, which is away from the sliding block 4, is sleeved with a casing pipe 6 through a thread. One end of the casing pipe 6, which is away from the pull rod 5, is welded with a connecting plate 7 on both sides. Culture pipelines 8 are installed in the bracket 2 along a vertical direction at an equal distance. A liquid inlet pipeline 10 communicated with the culture pipeline 8 is installed on one side of the bracket 2 along the vertical direction. A liquid storing tank 11 fixedly connected with the bracket 2 is installed on a bottom of the liquid inlet pipeline 10. A liquid discharging pipeline 12 communicated with the culture pipeline 8 is installed on the other side of the bracket 2 along the vertical direction. A culture groove 9 with an open top is formed in the top of the substrate 1 along the length direction. A liquid delivery pipeline 13 communicated with the liquid discharging pipeline 12 is installed in the culture groove 9.

Through holes 14 communicated with the interior of the culture pipeline 8 are formed in the top of the culture pipeline 8 along a length direction at an equal distance. Circular supporting plates 15 are movably sleeved in the through holes 14. A grid plate 16 is welded in the culture pipeline 8 along a length direction. A first liquid level sensor 17 fixedly connected with the inner side wall of the culture pipeline 8 is installed above one end of the grid plate 16 close to the liquid inlet pipeline 10. Brightening lamps 2-3 are installed at an equal distance along the length direction of the grid plate 16. One end of the brightening plate 2-2 is fixedly connected with the optical shaft. A rotating shaft movably sleeved with the inner side wall of the bracket 2 is welded on one end of the brightening plate 2-2, and the rotating shaft and the optical shaft are located on a same axis. A motor fixedly connected with the bracket 2 is installed on one end of the optical shaft which extends from the bracket 2. The motor is started to drive the driving gear 2-1 to rotate, so as to rotate the brightening plate 2-2 along the optical shaft, so that the brightening plate 2-2 moves to the side surface of the culture pipeline 8; and then plants on the culture pipeline 8 are brightened by using the brightening lamps 2-3.

Working principle: the first liquid level sensor 17 and the second liquid level sensor 19 are used to detect upper and lower limit positions of liquid in the culture pipeline 8. When the limit position is lower than a liquid level of the first liquid level sensor 17, the electromagnetic valve on the first connecting pipeline 18 is opened to deliver the culture solution into the culture pipeline 8; and when the limit position is higher than a liquid level of the second liquid level sensor 19, the electromagnetic valve is closed to complete automatic delivery of the culture solution. The culture solution that flows out of the second connecting pipeline 20 enters the culture groove 9 along the liquid discharging pipeline 12 and the liquid delivery pipeline 13; and then a plant in the culture groove 9 is cultured, thereby effectively avoiding the waste of the culture solution. The air pump on the air pipe 22 is started to supply air for the air inlet pipeline 21; and then the culture solution in the culture pipeline 8 is oxygenated by the nozzle, thereby effectively preventing a plant root from eroding due to lack of oxygen. Meanwhile, the grid plate 16 is used to balance the air. The connecting plate 7 is used to fixedly install the bracket 2. The sliding block 4 slides along the length direction of the sliding chute 3 during installation. Then, the casing pipe 6 is tightened so that the pull rod 5 extends out by an appropriate length, so as to facilitate installation and fixation of the bracket 2 and adapt to installation and fixation in different positions.

The above only describes preferred specific embodiments of the present invention, but the protection scope of the present invention is not limited to this. Equivalent replacements or changes made by those skilled in the art according to the technical solution of the present invention and the inventive concept within the technical scope disclosed by the present invention shall be included in the protection scope of the present invention.

## Claims

1. A household intelligent soilless culture system, comprising a rectangular substrate (1), wherein a U type bracket (2) is vertically welded on both ends of the substrate (1); a U type sliding chute (3) is formed in the bracket (2) along a length direction; a sliding block (4) is sleeved in the sliding chute (3) in a sliding manner; one end of the sliding block (4), which extends out of the sliding chute (3), is hinged with a pull rod (5), and one end of the pull rod (5), which is away from the sliding block (4), is sleeved with a casing pipe (6) through a thread; one end of the casing pipe (6), which is away from the pull rod (5), is welded with a connecting plate (7) on both sides; culture pipelines (8) are installed in the bracket (2) along a vertical direction at an equal distance; a liquid inlet pipeline (10) communicated with the culture pipeline (8) is installed on one side of the bracket (2) along the vertical direction; a liquid storing tank (11) fixedly connected with the bracket (2) is installed on a bottom of the liquid inlet pipeline (10); a liquid discharging pipeline (12) communicated with the culture pipeline (8) is installed on the other side of the bracket(2) along the vertical direction; a culture groove (9) with an open top is formed in the top of the substrate (1) along the length direction; a liquid delivery pipeline (13) communicated with the liquid discharging pipeline (12) is installed in the culture groove (9); two groups of parallel arc-shaped limiting grooves (23) are formed at both sides of one side of the bracket (2) close to the substrate (1) along a curved direction; and brightening mechanisms (24) are installed on the limiting grooves (23).

2. The household intelligent soilless culture system according to claim 1, wherein through holes (14) communicated with the interior of the culture pipeline (8) are formed in the top of the culture pipeline (8) along a length direction at an equal distance; circular supporting plates (15) are movably sleeved in the through holes (14); a grid plate (16) is welded in the culture pipeline (8) along a length direction; a first liquid level sensor (17) fixedly connected with the inner side wall of the culture pipeline (8) is installed above one end of the grid plate (16) close to the liquid inlet pipeline (10); a second liquid level sensor (19) fixedly connected with the inner side wall of the culture pipeline (8) is installed above one end of the grid plate (16) away from the liquid inlet pipeline (10); a first connecting pipeline (18) communicated with the liquid inlet pipeline (10) is installed above one end of the culture pipeline (8) close to the liquid inlet pipeline (10); and a second connecting pipeline (20) communicated with the liquid discharging pipeline (12) is installed above one end of the culture pipeline (8) away from the liquid inlet pipeline (10).

3. The household intelligent soilless culture system according to claim 1, wherein an air inlet pipeline (21) is installed on a bottom of the culture pipeline (8) along a length direction; a nozzle communicated with the air inlet pipeline (21) is embedded on the bottom of the culture pipeline (8); an air pipe (22) is installed on one end of the air inlet pipeline (21); and an air pump fixedly connected with the bracket (2) is installed on one end of the air pipe (22) away from the air inlet pipeline (21).

4. The household intelligent soilless culture system according to claim 2, wherein an electromagnetic valve is installed on the first connecting pipeline (18); and a water pump is installed on the liquid inlet pipeline (10).

5. The household intelligent soilless culture system according to claim 1 or 2 or 3 or 4, wherein a control box is installed under one side of the bracket (2); a single-chip microcomputer with a model of ARM is installed in the control box; and the single-chip microcomputer is electrically connected with the first liquid level sensor (17), the second liquid level sensor (19), the electromagnetic valve, the water pump and the air pump.

6. The household intelligent soilless culture system according to claim 1, wherein the brightening mechanism (24) comprises a driving gear (2-1) sleeved movably with the inner side wall of the limiting groove (23); an optical shaft is fixedly sleeved in the driving gear (2-1); an arc-shaped brightening plate (2-2) butted against the limiting groove (23) is installed on one end of the optical shaft which extends from the driving gear (2-1); brightening lamps (2-3) are installed at an equal distance on one side of the brightening plate (2-2) close to the substrate (1) along a length direction of the brightening plate (2-2); one end of the brightening plate (2-2) is fixedly connected with the optical shaft; a rotating shaft movably sleeved with the inner side wall of the bracket (2) is welded on one end of the brightening plate (2-2); the rotating shaft and the optical shaft are located on a same axis; and a motor fixedly connected with the bracket (2) is installed on one end of the optical shaft which extends from the bracket (2).
